# EUROPEAN PATENT APPLICATION

(11) **EP 4 554 271 A1**
(43) Date of publication of application: **14.05.2025**
(21) Application number: 23834600.1
(22) Date of filing: 13.06.2023
(51) Int. Cl.: H04W 24/02

(54) **CELL MANAGEMENT METHOD AND APPARATUS, TERMINAL, AND NETWORK DEVICE**

(30) Priority: 06.07.2022 CN 202210796707
(71) Applicant: Datang Mobile Communications Equipment Co., Ltd., Beijing 100085 (CN)
(72) Inventor: ZHANG, Bufang, Beijing 100085 (CN); XU, Meng, Beijing 100085 (CN); ZENG, Erlin, Beijing 100085 (CN); LIANG, Jing, Beijing 100085 (CN)
(74) Representative: Studio Torta S.p.A.
(86) International application number: PCT/CN2023/099899
(87) International publication number: WO 2024/007826

(57) **Abstract**

A cell management method, an apparatus, a terminal and a network device are provided, which relate to the field of communication technology. The cell management method includes: sending, by a terminal, a measurement result to a network device; receiving, by the terminal, a first command which is sent by the network device according to the measurement result; where the first command is a Layer 1 command or a Layer 2 command; performing, by the terminal, a cell management according to the first command.

## Description

### CROSS REFERENCE OF RELATED APPLICATION

The present disclosure claims a priority of Chinese patent disclosure No. 202210796707.2 filed on July 6, 2022, which is incorporated herein by reference in its entirety.

### TECHNICAL FIELD

The present disclosure relates to the field of communication technology, and in particular to a cell management method, an apparatus, a terminal and a network device.

### BACKGROUND

A cell handover triggered by Layer 3 (L3) includes two types: real-time switching and conditional switching. where, real-time switching means that when the network device side decides to switch the user equipment (User Equipment, UE, where UE is also called terminal) from the current serving cell to another cell, the network device side sends a radio resource control (Radio Resource Control, RRC) reconfiguration message to the UE, which carries the configuration information required for the UE to access the target cell; when the UE receives the RRC reconfiguration message sent by the network device side, the UE applies the configuration information of the target cell included in the reconfiguration message, synchronizes with the target cell side in initiating a random access process, and feeds back an RRC reconfiguration completion message to the target cell side to indicate that the UE on the network device side has successfully accessed the target cell.

Conditional handover means: the network device side pre-configures multiple target cells for the UE, that is, the configuration information and execution conditions of the target cell are sent to the UE in advance. When the UE receives the configuration information of the target cell, it will save the received configuration and measure and evaluate the configured candidate cells until there is a cell that meets the execution conditions. The UE will execute the stored reconfiguration message corresponding to the cell, perform the corresponding switching or primary and secondary cell (Primary SCG Cell, PSCell) change or PSCell addition process, that is, complete the downlink synchronization and trigger the random access process, access the target primary cell (Primary cell, PCell) or PSCell, and feedback the corresponding reconfiguration completion message to the network device side.

In order to implement a cell management mechanism that is faster than L3 commands, it is considered to introduce support for Layer 1 (L1) and Layer 2 (L2) mobility, and trigger cell management by issuing L1 or L2 commands. However, there is currently no specific solution for how to trigger cell management based on L1 or L2 commands.

### SUMMARY

The present disclosure provides a cell management method, apparatus, terminal and network equipment, which solve the problem that there is no specific solution for triggering cell management based on L1 or L2 commands.

A cell management method is provided in the embodiment of the present disclosure, including:
sending, by a terminal, a measurement result to a network device;
receiving, by the terminal, a first command which is sent by the network device according to the measurement result; where the first command is a Layer 1 command or a Layer 2 command; and
performing, by the terminal, a cell management according to the first command.

Optionally, the cell management includes at least one of the following:
primary cell adding;
primary cell changing;
cell handover;
primary SCG cell (PSCell) adding;
primary SCG cell changing;
secondary cell adding; or
secondary cell changing.

Optionally, the measurement result is carried by a physical uplink control channel (PUCCH), or the measurement result is carried by a physical uplink shared channel (PUSCH), or the measurement result is carried by a media access control (MAC) control element (CE).

Optionally, the measurement result includes at least one of the following:
a beam identifier;
a cell identifier of a cell where a beam corresponding to a beam measurement result is located;
a Layer 1 beam measurement result for a beam;
a beam identifier used as a transmission configuration indicator (TCI) identifier of a source reference signal;
a radio resource management (RRM) measurement result of a cell corresponding to the cell identifier;
a RRM measurement result of a cell corresponding to a TCI identifier;
first indication information, where the first indication information is configured to indicate whether a cell corresponding to a cell identifier meets an RRM measurement result threshold;
second indication information, where the second indication information is configured to indicate whether a cell corresponding to a TCI identifier meets the RRM measurement result threshold;
third indication information, where the third indication information is configured to indicate whether a signal quality of a beam is optimal within a first time period T1;
fourth indication information, where the fourth indication information is configured to indicate whether a signal quality of a beam meets a beam threshold within a second time period T2;
fifth indication information, where the fifth indication information is configured to indicate whether a signal quality of a beam is optimal in N1 consecutive beam measurements; or
sixth indication information, where the sixth indication information is configured to indicate whether a signal quality of a beam meets a beam threshold in N2 consecutive beam measurements;
where N1 and N2 are positive integers.

Optionally, the RRM measurement result threshold is a threshold of a measurement item of the RRM measurement result;
the threshold of the measurement item of the RRM measurement result includes at least one of the following:
a reference signal received power (RSRP) threshold;
a reference signal received quality (RSRQ) threshold;
a signal-to-noise and interference ratio (SINR) threshold; or
a block error rate (BLER) threshold.

Optionally, the beam threshold is a threshold of a measurement item of a Layer 1 beam measurement result;
the threshold of the measurement item of the Layer 1 beam measurement result includes at least one of the following:
a RSRP threshold;
a RSRQ threshold; or
a SINR threshold.

Optionally, the threshold of the measurement item of the RRM measurement result is configured for different types of reference signals separately;
and/or
the threshold of the measurement item of the Layer 1 beam measurement result is configured for different types of reference signals separately.

Optionally, the RRM measurement result is at least one of the following:
a measurement result after Layer 1 filtering and beam averaging;
a measurement result after Layer 1 filtering and Layer 3 beam filtering; or
a measurement result after Layer 1 filtering, beam averaging and Layer 3 cell filtering.

Optionally, the Layer 1 beam measurement result is the beam measurement item after only Layer 1 filtering.

Optionally, at least one of the following parameters is pre-configured by a network device side or specified by a protocol:
the RRM measurement result threshold;
the beam threshold;
the first time period T1;
the second time period T2;
the number N1 of beam measurements; or
the number N2 of beam measurements.

A cell management method is provided in the embodiment of the present disclosure, including:
receiving, by a network device, a measurement result sent by a terminal;
sending, by a network device, a first command to the terminal according to the measurement result; where the first command is a Layer 1 command or a Layer 2 command, and the first command is configured to instruct the terminal to perform a cell management.

Optionally, the sending by the network device the first command to the terminal according to the measurement result includes:
making, by the network device, a cell management decision according to the measurement result, and determining a target cell and/or a target beam corresponding to the target cell;
sending, by the network device, the first command to the terminal; where the first command carries indication information for indicating the target cell and/or the target beam.

Optionally, the making by the network device the cell management decision according to the measurement result includes:
if and only if the measurement result satisfies a cell management triggering condition, making, by the network device, the cell management decision according to the measurement result.

Optionally, the cell management triggering condition includes at least one of the following:
the target cell meets a pre-configured radio resource management (RRM) handover triggering condition;
a signal quality of a beam corresponding to the target cell is optimal in a third time period T3;
a signal quality of a beam corresponding to the target cell meets a preconfigured beam triggering condition within a fourth time period T4;
a signal quality of a beam corresponding to the target cell is optimal in N3 consecutive beam measurement result reports; or
a signal quality of a beam corresponding to the target cell meets a pre-configured beam triggering condition in N4 consecutive beam measurement result reports;
where N3 and N4 are positive integers.

Optionally, the measurement result is carried by a physical uplink control channel, or the measurement result is carried by a physical uplink shared channel, or the measurement result is carried by a media access control control element.

Optionally, the cell management includes at least one of the following:
primary cell adding;
primary cell changing;
cell handover;
primary SCG cell (PSCell) adding;
primary SCG cell changing;
secondary cell adding; or
secondary cell changing.

Optionally, the measurement result includes at least one of the following:
a beam identifier;
a cell identifier of a cell where a beam corresponding to a beam measurement result is located;
a Layer 1 beam measurement result for a beam;
a beam identifier used as a transmission configuration indicator (TCI) identifier of a source reference signal;
a radio resource management (RRM) measurement result of a cell corresponding to the cell identifier;
a RRM measurement result of a cell corresponding to a TCI identifier;
first indication information, where the first indication information is configured to indicate whether a cell corresponding to a cell identifier meets an RRM measurement result threshold;
second indication information, where the second indication information is configured to indicate whether a cell corresponding to a TCI identifier meets the RRM measurement result threshold;
third indication information, where the third indication information is configured to indicate whether a signal quality of a beam is optimal within a first time period T1;
fourth indication information, where the fourth indication information is configured to indicate whether a signal quality of a beam meets a beam threshold within a second time period T2;
fifth indication information, where the fifth indication information is configured to indicate whether a signal quality of a beam is optimal in N1 consecutive beam measurements; or
sixth indication information, where the sixth indication information is configured to indicate whether a signal quality of a beam meets a beam threshold in N2 consecutive beam measurements;
where N1 and N2 are positive integers.

Optionally, the RRM handover triggering condition is a threshold of a measurement item of the RRM measurement result, and/or the RRM measurement result threshold is a threshold of a measurement item of the RRM measurement result;
the threshold of the measurement item of the RRM measurement result includes at least one of the following:
a reference signal received power (RSRP) threshold;
a reference signal received quality (RSRQ) threshold;
a signal-to-noise and interference ratio (SINR) threshold; or
a block error rate (BLER) threshold.

Optionally, the threshold of the measurement item of the RRM measurement result is configured for different types of reference signals separately.

Optionally, the RRM measurement result is at least one of the following:
a measurement result after Layer 1 filtering and beam averaging;
a measurement result after Layer 1 filtering and Layer 3 beam filtering; or
a measurement result after Layer 1 filtering, beam averaging and Layer 3 cell filtering.

Optionally, the beam triggering condition is a threshold of a measurement item of the Layer 1 beam measurement result, and/or the beam threshold is the threshold of the measurement item of the Layer 1 beam measurement result;
a threshold of the measurement item of the Layer 1 beam measurement result includes at least one of the following:
RSRP threshold;
RSRQ threshold; or
SINR threshold.

Optionally, the threshold of the measurement item of the Layer 1 beam measurement result is configured for different types of reference signals separately.

Optionally, the Layer 1 beam measurement result is the beam measurement item after only Layer 1 filtering.

Optionally, at least one of the following parameters is pre-configured on the network device side or specified by the protocol:
the RRM measurement result threshold;
the beam threshold;
the first time period T1;
the second time period T2;
the third time period T3;
the fourth time period T4;
the number N1 of beam measurements;
the number N2 of beam measurements;
the number N3 of beam measurements; or
the number N4 of beam measurements.

A cell management apparatus is provided in the embodiment of the present disclosure, including a memory, a transceiver, and a processor; where
the memory is configured to store computer programs; the transceiver is configured to send and receive data under a control of the processor; the processor is configured to read the computer program in the memory to perform:
sending a measurement result to a network device;
receiving a first command which is sent by the network device according to the measurement result; where the first command is a Layer 1 command or a Layer 2 command; and
performing a cell management according to the first command.

Optionally, the cell management includes at least one of the following:
primary cell adding;
primary cell changing;
cell handover;
primary SCG cell (PSCell) adding;
primary SCG cell changing;
secondary cell adding; or
secondary cell changing.

Optionally, the measurement result is carried by a physical uplink control channel, or the measurement result is carried by a physical uplink shared channel, or the measurement result is carried by a media access control control element.

Optionally, the measurement result includes at least one of the following:
a beam identifier;
a cell identifier of a cell where a beam corresponding to a beam measurement result is located;
a Layer 1 beam measurement result for a beam;
a beam identifier used as a transmission configuration indicator (TCI) identifier of a source reference signal;
a radio resource management (RRM) measurement result of a cell corresponding to the cell identifier;
a RRM measurement result of a cell corresponding to a TCI identifier;
first indication information, where the first indication information is configured to indicate whether a cell corresponding to a cell identifier meets an RRM measurement result threshold;
second indication information, where the second indication information is configured to indicate whether a cell corresponding to a TCI identifier meets the RRM measurement result threshold;
third indication information, where the third indication information is configured to indicate whether a signal quality of a beam is optimal within a first time period T1;
fourth indication information, where the fourth indication information is configured to indicate whether a signal quality of a beam meets a beam threshold within a second time period T2;
fifth indication information, where the fifth indication information is configured to indicate whether a signal quality of a beam is optimal in N1 consecutive beam measurements; or
sixth indication information, where the sixth indication information is configured to indicate whether a signal quality of a beam meets a beam threshold in N2 consecutive beam measurements;
where N1 and N2 are positive integers.

Optionally, the RRM measurement result threshold is a threshold of a measurement item of the RRM measurement result;
the threshold of the measurement item of the RRM measurement result includes at least one of the following:
a reference signal received power (RSRP) threshold;
a reference signal received quality (RSRQ) threshold;
a signal-to-noise and interference ratio (SINR) threshold; or
a block error rate (BLER) threshold.

Optionally, the beam threshold is a threshold of a measurement item of a Layer 1 beam measurement result;
the threshold of the measurement item of the Layer 1 beam measurement result includes at least one of the following:
a RSRP threshold;
a RSRQ threshold; or
a SINR threshold.

Optionally, the threshold of the measurement item of the RRM measurement result is configured for different types of reference signals separately;
and/or
the threshold of the measurement item of the Layer 1 beam measurement result is configured for different types of reference signals separately.

Optionally, the RRM measurement result is at least one of the following:
a measurement result after Layer 1 filtering and beam averaging;
a measurement result after Layer 1 filtering and Layer 3 beam filtering; or
a measurement result after Layer 1 filtering, beam averaging and Layer 3 cell filtering.

Optionally, the Layer 1 beam measurement result is the beam measurement item after only Layer 1 filtering.

Optionally, at least one of the following parameters is pre-configured by a network device side or specified by a protocol:
the RRM measurement result threshold;
the beam threshold;
the first time period T1;
the second time period T2;
the number N1 of beam measurements; or
the number N2 of beam measurements.

A terminal is provided in the embodiment of the present disclosure, including:
a sending unit, configured to send a measurement result to a network device;
a receiving unit, configured to receive a first command which is sent by the network device according to the measurement result; where the first command is a Layer 1 command or a Layer 2 command; and
a processing unit, configured to perform cell management according to the first command.

A cell management apparatus is provided in the embodiment of the present disclosure, including a memory, a transceiver, and a processor;
the memory is configured to store computer programs; the transceiver is configured to send and receive data under the control of the processor; the processor is configured to read the computer program in the memory to perform:
receiving a measurement result sent by a terminal;
sending a first command to the terminal according to the measurement result; where the first command is a Layer 1 command or a Layer 2 command, and the first command is configured to instruct the terminal to perform a cell management.

Optionally, the processor is configured to read the computer program in the memory to perform:
making a cell management decision according to the measurement result, and determining a target cell and/or a target beam corresponding to the target cell;
sending the first command to the terminal; where the first command carries indication information for indicating the target cell and/or the target beam.

Optionally, the processor is configured to read the computer program in the memory to perform:
if and only if the measurement result satisfies the cell management triggering condition, making the cell management decision according to the measurement result.

Optionally, the cell management triggering condition includes at least one of the following:
the target cell meets a pre-configured radio resource management (RRM) handover triggering condition;
a signal quality of a beam corresponding to the target cell is optimal in a third time period T3;
a signal quality of a beam corresponding to the target cell meets a preconfigured beam triggering condition within a fourth time period T4;
a signal quality of a beam corresponding to the target cell is optimal in N3 consecutive beam measurement result reports; or
a signal quality of a beam corresponding to the target cell meets a pre-configured beam triggering condition in N4 consecutive beam measurement result reports;
where N3 and N4 are positive integers.

Optionally, the measurement result is carried by a physical uplink control channel, or the measurement result is carried by a physical uplink shared channel, or the measurement result is carried by a media access control control element.

Optionally, the cell management includes at least one of the following:
primary cell adding;
primary cell changing;
cell handover;
primary SCG cell (PSCell) adding;
primary SCG cell changing;
secondary cell adding; or
secondary cell changing.

Optionally, the measurement result includes at least one of the following:
a beam identifier;
a cell identifier of a cell where a beam corresponding to a beam measurement result is located;
a Layer 1 beam measurement result for a beam;
a beam identifier used as a transmission configuration indicator (TCI) identifier of a source reference signal;
a radio resource management (RRM) measurement result of a cell corresponding to the cell identifier;
a RRM measurement result of a cell corresponding to a TCI identifier;
first indication information, where the first indication information is configured to indicate whether a cell corresponding to a cell identifier meets an RRM measurement result threshold;
second indication information, where the second indication information is configured to indicate whether a cell corresponding to a TCI identifier meets the RRM measurement result threshold;
third indication information, where the third indication information is configured to indicate whether a signal quality of a beam is optimal within a first time period T1;
fourth indication information, where the fourth indication information is configured to indicate whether a signal quality of a beam meets a beam threshold within a second time period T2;
fifth indication information, where the fifth indication information is configured to indicate whether a signal quality of a beam is optimal in N1 consecutive beam measurements; or
sixth indication information, where the sixth indication information is configured to indicate whether a signal quality of a beam meets a beam threshold in N2 consecutive beam measurements;
where N1 and N2 are positive integers.

Optionally, the RRM handover triggering condition is a threshold of a measurement item of the RRM measurement result, and/or the RRM measurement result threshold is a threshold of a measurement item of the RRM measurement result;
the threshold of the measurement item of the RRM measurement result includes at least one of the following:
a reference signal received power (RSRP) threshold;
a reference signal received quality (RSRQ) threshold;
a signal-to-noise and interference ratio (SINR) threshold; or
a block error rate (BLER) threshold.

Optionally, the threshold of the measurement item of the RRM measurement result is configured for different types of reference signals separately.

Optionally, the RRM measurement result is at least one of the following:
a measurement result after Layer 1 filtering and beam averaging;
a measurement result after Layer 1 filtering and Layer 3 beam filtering; or
a measurement result after Layer 1 filtering, beam averaging and Layer 3 cell filtering.

Optionally, the beam triggering condition is a threshold of a measurement item of the Layer 1 beam measurement result, and/or the beam threshold is the threshold of the measurement item of the Layer 1 beam measurement result;
a threshold of the measurement item of the Layer 1 beam measurement result includes at least one of the following:
RSRP threshold;
RSRQ threshold; or
SINR threshold.

Optionally, the threshold of the measurement item of the Layer 1 beam measurement result is configured for different types of reference signals separately.

Optionally, the Layer 1 beam measurement result is the beam measurement item after only Layer 1 filtering.

Optionally, at least one of the following parameters is pre-configured on the network device side or specified by the protocol:
the RRM measurement result threshold;
the beam threshold;
the first time period T1;
the second time period T2;
the third time period T3;
the fourth time period T4;
the number N1 of beam measurements;
the number N2 of beam measurements;
the number N3 of beam measurements; or
the number N4 of beam measurements.

A network device is provided in the embodiment of the present disclosure, including:
a receiving unit, configured to receive a measurement result sent by a terminal;
a sending unit, configured to send a first command to the terminal according to the measurement result; where the first command is a Layer 1 command or a Layer 2 command, and the first command is configured to instruct the terminal to perform a cell management.

A processor-readable storage medium is provided in the embodiment of the present disclosure, storing a computer program, where the computer program is configured to enable the processor to perform the cell management method at the terminal side, or the computer program is configured to enable the processor to perform the cell management method at the network device side.

According to the embodiment of the present disclosure, the terminal sends the measurement result to the network device, and when receiving the first command of Layer 1 or Layer 2 sent by the network device according to the measurement result, the terminal performs cell management according to the first command. In this way, the solution realizes cell management based on Layer 1 or Layer 2, and solves the problem that there is no specific solution for how to trigger cell management based on L1 or L2 commands.

### BRIEF DESCRIPTION OF THE DRAWINGS

FIG.1 is a flow chart showing a cell management method at a terminal side according to an embodiment of the present disclosure;
FIG.2 is a flow chart showing a cell management method on a network device side according to an embodiment of the present disclosure;
FIG.3 is a block diagram of a cell management apparatus on the terminal side according to an embodiment of the present disclosure;
FIG.4 is a block diagram of a terminal according to an embodiment of the present disclosure;
FIG.5 is a block diagram of a cell management apparatus on a network device side according to an embodiment of the present disclosure; and
FIG. 6 is a block diagram of a network device according to an embodiment of the present disclosure.

### DETAILED DESCRIPTION

In order to make the technical problems, technical solutions and advantages to be solved by the present disclosure clearer, the following will be described in detail with reference to the accompanying drawings and specific embodiments. In the following description, specific details such as specific configurations and components are provided only to help fully understand the embodiments of the present disclosure. Therefore, it should be clear to those skilled in the art that various changes and modifications can be made to the embodiments described herein without departing from the scope and spirit of the present disclosure. In addition, for clarity and brevity, the description of known functions and structures is omitted.

It should be understood that the references to "one embodiment "or "an embodiment "throughout the specification mean that specific features, structures, or characteristics associated with the embodiment are included in at least one embodiment of the present disclosure. Therefore, the references to "in one embodiment "or "in an embodiment "appearing throughout the specification do not necessarily refer to the same embodiment. In addition, these specific features, structures, or characteristics may be combined in any suitable manner in one or more embodiments.

In various embodiments of the present disclosure, it should be understood that the sequence numbers of the following processes do not imply the order of execution, and the order of execution of each process should be determined by its function and internal logic, and should not constitute any limitation on the implementation process of the embodiments of the present disclosure.

Additionally, the terms "system" and "network" are often used interchangeably herein.

The solution provided by the embodiments of the present disclosure can be applied to a variety of systems, especially the 5th generation (^{5th} The applicable systems may include the Global System of Mobile Communication (GSM) system, the Code Division Multiple Access (CDMA) system, the Wideband Code Division Multiple Access (WCDMA) general packet radio service (GPRS) system, the Long Term Evolution (LTE) system, the LTE frequency division duplex (FDD) system, the LTE time division duplex (TDD) system, the Long Term Evolution Advanced (LTE-A) system, the Universal Mobile Telecommunications System (UMTS), the Worldwide Interoperability for Microwave Access (WiMAX) system, the 5G New Radio (NR) system, etc. These systems include terminal equipment and network equipment. The system may also include core network parts, such as the Evolved Packet System (EPS), the 5G System (5GS), etc.

Network devices and terminal devices can each use one or more antennas for multiple input multiple output (MIMO) transmission. MIMO transmission can be single user MIMO (SU-MIMO) or multi-user MIMO (MU-MIMO). Depending on the form and number of antenna combinations, MIMO transmission can be 2 Dimensional MIMO (2 Dimensional MIMO). MIMO, 2D-MIMO), 3-dimensional MIMO (3 Dimensional MIMO, 3D-MIMO), full-dimensional MIMO (Full Dimension MIMO, FD-MIMO) or massive MIMO (massive-MIMO), it can also be diversity transmission or pre-code transmission or beamforming transmission, etc.

In the embodiments of the present disclosure, the term "and/or" describes the association relationship of associated objects, indicating that three relationships may exist. For example, A and/or B may represent three situations: A exists alone, A and B exist at the same time, and B exists alone. The character "/"generally indicates that the associated objects before and after are in an "or" relationship.

The term "a plurality of" in the present disclosure refers to two or more than two, and other quantifiers are similar thereto.

The following will be combined with the drawings in the embodiments of the present disclosure to clearly and completely describe the technical solutions in the embodiments of the present disclosure. Obviously, the described embodiments are only part of the embodiments of the present disclosure, not all of the embodiments. Based on the embodiments in the present disclosure, all other embodiments obtained by ordinary technicians in this field without creative work are within the scope of protection of the present disclosure.

The embodiments of the present disclosure provide a cell management method, apparatus, terminal and network device to solve the problem that there is no specific solution for triggering cell management based on L1 or L2 commands. The method, apparatus, terminal or network device are based on the same application concept. Since the principles of solving the problem by the method, apparatus, terminal or network device are similar, the implementation of the method, apparatus, terminal or network device can refer to each other, and the repeated parts will not be repeated.

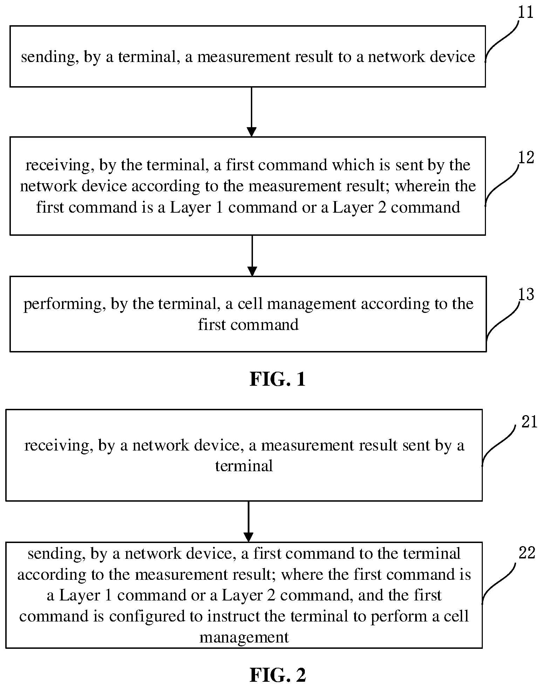

As shown in FIG.1, an embodiment of the present disclosure provides a cell management method, which specifically includes the following steps:
Step 11: sending, by a terminal, a measurement result to a network device.

Optionally, before the terminal sends the measurement result to the network device, the method may further include: the terminal receives measurement configuration information sent by the network device; and the terminal measures the candidate cell according to the measurement configuration information to obtain the measurement result.

The measurement configuration information includes but is not limited to at least one of the following: RRM threshold; beam threshold; first pre-configured time period (for example: the first pre-configured time period is a time threshold used to detect whether the signal quality of the beam is always optimal); second pre-configured time period (for example: the second pre-configured time period is a time threshold used to detect whether the signal quality of the beam always meets the pre-configured beam threshold); first pre-configured beam measurement number (for example: the first pre-configured beam measurement number is the number of times the signal quality of the beam is continuously optimal); second pre-configured beam measurement number (for example: the second pre-configured beam measurement number is the number of times the signal quality of the beam continuously meets the pre-configured beam threshold), etc.

The terminal receives measurement configuration information sent by the network device, including at least one of the following: the terminal receives measurement configuration information sent by the network device through an RRC message; the terminal receives measurement configuration information sent by the network device through a MAC CE; the terminal receives measurement configuration information sent by the network device through downlink control information (Downlink Control Information, DCI).

Optionally, the terminal may report the measurement result to the network device through the physical layer or MAC layer to assist the network device in making a cell management decision. For example, the measurement result is carried through a physical uplink control channel, or the measurement result is carried through a physical uplink shared channel, or the measurement result is carried through a media access control control element.

Step 12: receiving, by the terminal, a first command which is sent by the network device according to the measurement result; wherein the first command is a Layer 1 command or a Layer 2 command.

Optionally, the network device receives the measurement result sent by the terminal, makes a cell management decision based on the measurement result, selects a target cell and its corresponding target beam, and sends a first command of Layer 1 or Layer 2 to the terminal to instruct the terminal to perform cell management. For example, the first command may be a physical layer command (such as DCI) and/or a MAC layer command, and the first command may carry indication information for indicating the target cell or the target beam.

Step 13: performing, by the terminal, a cell management according to the first command.

Optionally, the cell management includes but is not limited to at least one of the following: adding a primary cell; changing a primary cell; cell switching; adding a primary and secondary cell; changing a primary and secondary cell; adding a secondary cell; changing a secondary cell.

In the above solution, the terminal sends the measurement result to the network device, and when receiving the first command of Layer 1 or Layer 2 sent by the network device according to the measurement result, the terminal performs cell management according to the first command. In this way, the solution implements cell management based on Layer 1 or Layer 2, solving the problem that there is no specific solution for how to trigger cell management based on L1 or L2 commands.

Optionally, the measurement result includes at least one of the following:
a beam identifier;
a cell identifier of a cell where a beam corresponding to a beam measurement result is located;
a Layer 1 beam measurement result for a beam;
a beam identifier used as a transmission configuration indicator (TCI) identifier of a source reference signal;
a radio resource management (RRM) measurement result of a cell corresponding to the cell identifier;
a RRM measurement result of a cell corresponding to a TCI identifier;
first indication information, where the first indication information is configured to indicate whether a cell corresponding to a cell identifier meets an RRM measurement result threshold;
second indication information, where the second indication information is configured to indicate whether a cell corresponding to a TCI identifier meets the RRM measurement result threshold;
third indication information, where the third indication information is configured to indicate whether a signal quality of a beam is optimal within a first time period T1;
fourth indication information, where the fourth indication information is configured to indicate whether a signal quality of a beam meets a beam threshold within a second time period T2;
fifth indication information, where the fifth indication information is configured to indicate whether a signal quality of a beam is optimal in N1 consecutive beam measurements; or
sixth indication information, where the sixth indication information is configured to indicate whether a signal quality of a beam meets a beam threshold in N2 consecutive beam measurements;
where N1 and N2 are positive integers.

In this embodiment, considering that the beam measurement result is instantaneous and has a large time-varying characteristic, the measurement result may include at least one item, such as the beam identifier, the cell identifier of the cell where the beam corresponding to the beam measurement result is located, the Layer 1 beam measurement result for the beam, the TCI identifier using the beam identifier as the source reference signal, and the RRM measurement result of the cell corresponding to the cell identifier, so as to avoid frequent changes, additions or switching of cells due to the time-varying characteristics of the measurement results, and even failures in cell changes, additions or switching.

Optionally, the RRM measurement result threshold is a threshold of a measurement item of the RRM measurement result; where the threshold of the measurement item of the RRM measurement result includes but is not limited to at least one of the following: an RSRP threshold; an RSRQ threshold; a SINR threshold; and a BLER threshold.

Optionally, the threshold of the measurement item of the RRM measurement result is configured separately for different types of reference signals; for example: distinguishing the threshold of the measurement item of the RRM measurement result for the channel state reference information (Channel State Information Reference Signal, CSI-RS), the threshold of the measurement item of the RRM measurement result for the synchronization signal block (Synchronization Signal Block, SSB), etc., but the embodiments of the present disclosure are not limited thereto.

Optionally, the beam threshold is a threshold of a measurement item of a Layer 1 beam measurement result; where the threshold of the measurement item of the Layer 1 beam measurement result includes but is not limited to at least one of the following: an RSRP threshold; an RSRQ threshold; and an SINR threshold.

Optionally, the threshold of the measurement item of the Layer 1 beam measurement result is configured separately for different types of reference signals. For example, the threshold of the measurement item of the Layer 1 beam measurement result for CSI-RS and the threshold of the measurement item of the Layer 1 beam measurement result for SSB are distinguished, and the embodiments of the present disclosure are not limited thereto.

Optionally, at least one of the RRM measurement result threshold, the beam threshold, the first time period T1, the second time period T2, the number N1 of beam measurements, and the number of beam measurements N2 is pre-configured on the network device side or specified by the protocol.

Optionally, the RRM measurement result is at least one of the following:
a measurement result after Layer 1 filtering and beam averaging;
a measurement result after Layer 1 filtering and Layer 3 beam filtering; or
a measurement result after Layer 1 filtering, beam averaging and Layer 3 cell filtering.

Optionally, the Layer 1 beam measurement result is the beam measurement item after only Layer 1 filtering.

According to the embodiment of the present disclosure, the terminal sends the measurement result to the network device, and in the case of receiving the first command of Layer 1 or Layer 2 sent by the network device according to the measurement result, the terminal performs cell management according to the first command. In this way, the scheme realizes cell management based on Layer 1 or Layer 2, and solves the problem that there is no specific solution for triggering cell management based on L1 or L2 commands. And considering that the beam measurement result is instantaneous and has a large time-varying characteristic, the measurement result may include at least one item, such as the beam identifier, the cell identifier of the cell where the beam corresponding to the beam measurement result is located, the Layer 1 beam measurement result for the beam, the TCI identifier with the beam identifier as the source reference signal, and the RRM measurement result of the cell corresponding to the cell identifier, in addition to the beam identifier, the TCI identifier with the beam identifier as the source reference signal, and the RRM measurement result of the cell corresponding to the cell identifier, in addition to the beam identifier, the measurement result may also include at least one item, such as the first indication information, the second indication information, the third indication information, the fourth indication information, the fifth indication information, and the sixth indication information, so as to avoid the problem of frequent changes, additions, or switching of cells due to the time-varying characteristics of the measurement results, and even the failure of cell changes, additions, or switching.

The terminal of the present disclosure may be a device that provides voice and/or data connectivity to a user, a handheld device with a wireless connection function, or other processing devices connected to a wireless modem. In different systems, the names of terminal devices may also be different. For example, in a 5G system, the terminal device may be called a user equipment (UE). A wireless terminal device may communicate with one or more core networks (CN) via a radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and /or data with a wireless access network. For example, personal communication service (PCS) phones, cordless phones, session initiation protocol (SIP) phones, wireless local loop (WLL) stations, personal digital assistants (PDAs), and other devices. The wireless terminal device may also be referred to as a system, a subscriber unit, a subscriber station, a mobile station, a mobile station, a remote station, an access point, a remote terminal device, an access terminal device, a user terminal device, a user agent, and a user device, but is not limited in the embodiments of the present disclosure.

As shown in FIG2, the present disclosure provides a cell management method, including the following steps:
Step 21: receiving, by a network device, a measurement result sent by a terminal.

Optionally, the terminal may report the measurement result to the network device through the physical layer or MAC layer to assist the network device in making a cell management decision. For example, the measurement result is carried through a physical uplink control channel, or the measurement result is carried through a physical uplink shared channel, or the measurement result is carried through a media access control control element.

Optionally, before the network device receives the measurement result sent by the terminal, the method may further include: the network device sends measurement configuration information to the terminal.

The measurement configuration information includes but is not limited to at least one of the following: RRM threshold; beam threshold; first pre-configured time period (for example: the first pre-configured time period is a time threshold used to detect whether the signal quality of the beam is always optimal); second pre-configured time period (for example: the second pre-configured time period is a time threshold used to detect whether the signal quality of the beam always meets the pre-configured beam threshold); first pre-configured beam measurement number (for example: the first pre-configured beam measurement number is the number of times the signal quality of the beam is continuously optimal); second pre-configured beam measurement number (for example: the second pre-configured beam measurement number is the number of times the signal quality of the beam continuously meets the pre-configured beam threshold), etc.

In this way, the terminal measures the candidate cell according to the measurement configuration information, obtains a measurement result, and reports the measurement result to the network device to assist the network device in making a cell management decision.

The network device sends measurement configuration information to the terminal, including at least one of the following: the network device sends the measurement configuration information to the terminal through an RRC message; the network device sends the measurement configuration information to the terminal through a MAC CE; the network device sends the measurement configuration information to the network device through a DCI.

Step 22: sending, by a network device, a first command to the terminal according to the measurement result; where the first command is a Layer 1 command or a Layer 2 command, and the first command is configured to instruct the terminal to perform a cell management.

Optionally, the network device receives the measurement result sent by the terminal, makes a cell management decision based on the measurement result, selects a target cell and its corresponding target beam, and sends a first command of Layer 1 or Layer 2 to the terminal to instruct the terminal to perform cell management. For example, the first command may be a physical layer command (such as DCI) and/or a MAC layer command, and the first command may carry indication information for indicating the target cell or the target beam.

Optionally, the cell management includes but is not limited to at least one of the following: adding a primary cell; changing a primary cell; cell switching; adding a primary and secondary cell; changing a primary and secondary cell; adding a secondary cell; changing a secondary cell.

In the above solution, the network device receives the measurement result sent by the terminal, and sends a first command to the terminal according to the measurement result to instruct the terminal to perform cell management. In this way, the solution implements cell management based on Layer 1 or Layer 2, solving the problem that there is no specific solution for triggering cell management based on L1 or L2 commands.

Optionally, the network device sending a first command to the terminal according to the measurement result includes:
making, by the network device, a cell management decision according to the measurement result, and determining a target cell and/or a target beam corresponding to the target cell;
sending, by the network device, the first command to the terminal; where the first command carries indication information for indicating the target cell and/or the target beam.

For example: the network device makes a cell management decision based on the measurement results reported by the terminal, determines the primary cell to be added/changed, or determines the cell to be switched, or determines the primary and secondary cells to be added/changed, or determines the secondary cells to be added/changed, etc., that is, determines the target cell to be added/changed/switched, and determines the target beam corresponding to the target cell. The first command sent by the network device to the terminal carries indication information for indicating the target cell and/or the target beam, so that the terminal can perform cell management according to the indication information, that is, at least one of adding a primary cell, changing a primary cell, switching a cell, adding a primary and secondary cell, changing a primary and secondary cell, adding a secondary cell, and changing a secondary cell.

Optionally, the making by the network device the cell management decision according to the measurement result includes:
if and only if the measurement result satisfies a cell management triggering condition, making, by the network device, the cell management decision according to the measurement result.

Optionally, the cell management triggering condition includes at least one of the following:
the target cell meets a pre-configured radio resource management (RRM) handover triggering condition;
a signal quality of a beam corresponding to the target cell is optimal in a third time period T3;
a signal quality of a beam corresponding to the target cell meets a preconfigured beam triggering condition within a fourth time period T4;
a signal quality of a beam corresponding to the target cell is optimal in N3 consecutive beam measurement result reports; or
a signal quality of a beam corresponding to the target cell meets a pre-configured beam triggering condition in N4 consecutive beam measurement result reports;
where N3 and N4 are positive integers.

Specifically, the network device determines whether to trigger a cell management decision based on the measurement results reported by the terminal. For example, the network device may only consider cells that meet the pre-configured RRM measurement result threshold and the beam measurement results corresponding to the cells as target cells and corresponding target beams; or, the network device may only consider the optimal beams that are always optimal within the duration and the cells where they are located as target cells and target beams, etc. The embodiments of the present disclosure are not limited to this.

Optionally, the measurement result includes but is not limited to at least one of the following:
a beam identifier;
a cell identifier of a cell where a beam corresponding to a beam measurement result is located;
a Layer 1 beam measurement result for a beam;
a beam identifier used as a transmission configuration indicator (TCI) identifier of a source reference signal;
a radio resource management (RRM) measurement result of a cell corresponding to the cell identifier;
a RRM measurement result of a cell corresponding to a TCI identifier;
first indication information, where the first indication information is configured to indicate whether a cell corresponding to a cell identifier meets an RRM measurement result threshold;
second indication information, where the second indication information is configured to indicate whether a cell corresponding to a TCI identifier meets the RRM measurement result threshold;
third indication information, where the third indication information is configured to indicate whether a signal quality of a beam is optimal within a first time period T1;
fourth indication information, where the fourth indication information is configured to indicate whether a signal quality of a beam meets a beam threshold within a second time period T2;
fifth indication information, where the fifth indication information is configured to indicate whether a signal quality of a beam is optimal in N1 consecutive beam measurements; or
sixth indication information, where the sixth indication information is configured to indicate whether a signal quality of a beam meets a beam threshold in N2 consecutive beam measurements;
where N1 and N2 are positive integers.

In this embodiment, considering that the beam measurement result is instantaneous and has a large time-varying characteristic, the measurement result may include at least one item, such as the beam identifier, the cell identifier of the cell where the beam corresponding to the beam measurement result is located, the Layer 1 beam measurement result for the beam, the TCI identifier using the beam identifier as the source reference signal, and the RRM measurement result of the cell corresponding to the cell identifier, so as to avoid frequent changes, additions or switching of cells due to the time-varying characteristics of the measurement results, and even failures in cell changes, additions or switching.

Optionally, the RRM handover triggering condition is a threshold of a measurement item of the RRM measurement result, and/or the RRM measurement result threshold is a threshold of a measurement item of the RRM measurement result; where the threshold of the measurement item of the RRM measurement result includes but is not limited to at least one of the following: RSRP threshold; RSRQ threshold; SINR threshold; BLER threshold.

Optionally, the threshold of the measurement item of the RRM measurement result is configured separately for different types of reference signals; for example: distinguishing the threshold of the measurement item of the RRM measurement result for CSI-RS, the threshold of the measurement item of the RRM measurement result for SSB, etc., but the embodiments of the present disclosure are not limited thereto.

Optionally, the RRM measurement result is at least one of the following:
a measurement result after Layer 1 filtering and beam averaging;
a measurement result after Layer 1 filtering and Layer 3 beam filtering; or
a measurement result after Layer 1 filtering, beam averaging and Layer 3 cell filtering.

Optionally, the beam triggering condition is a threshold of a measurement item of a Layer 1 beam measurement result, and/or the beam threshold is a threshold of a measurement item of a Layer 1 beam measurement result; where the threshold of the measurement item of the Layer 1 beam measurement result includes but is not limited to at least one of the following: RSRP threshold; RSRQ threshold; SINR threshold.

Optionally, the beam threshold is a threshold of a measurement item of a Layer 1 beam measurement result; where the threshold of the measurement item of the Layer 1 beam measurement result includes but is not limited to at least one of the following: an RSRP threshold; an RSRQ threshold; and an SINR threshold.

Optionally, the Layer 1 beam measurement result is the beam measurement item after only Layer 1 filtering.

Optionally, at least one of the RRM measurement result threshold, the beam threshold, the first time period T1, the second time period T2, the third time period, the fourth time period, the number N1 of beam measurements, the number of beam measurements N2, the number of beam measurements N3, and the number of beam measurements N4 is pre-configured on the network device side or specified by the protocol.

The present disclosure may be a base station, which may include multiple cells providing services for terminals. Depending on the specific application scenario, the base station may also be called an access point, or may be a device in an access network that communicates with a wireless terminal device through one or more sectors on an air interface, or may be another name. The network device may be used to interchange received air frames with Internet Protocol (IP) packets, and serve as a router between the wireless terminal device and the rest of the access network, where the rest of the access network may include an IP communication network. The network device may also coordinate the attribute management of the air interface. For example, the network device involved in the embodiments of the present disclosure may be a network device (Base Transceiver Station, BTS) in the Global System for Mobile communications (GSM) or Code Division Multiple Access (CDMA), or a network device (NodeB) in Wide-band Code Division Multiple Access (WCDMA), or an evolutionary network device (eNB or e-NodeB) in the long term evolution (LTE) system, or a 5G base station (gNB) in the 5G network architecture (next generation system), or a home evolved Node B (HeNB), a relay node, a home base station (femto), a pico base station (pico), etc., which is not limited in the embodiments of the present disclosure. In some network structures, the network device may include a centralized unit (CU) node and a distributed unit (DU) node, and the centralized unit and the distributed unit may also be arranged geographically separately.

The following describes the cell management method in the interaction process between the terminal and the network side in the embodiment of the present disclosure in combination with specific embodiments:
Embodiment 1: The UE reports the measurement result to the network device side, and the network device side makes a serving cell management decision based on the measurement result, specifically including:
Step 1: Optionally, the network device side sends measurement configuration information to the UE, including but not limited to at least one of the following: RRM threshold, beam threshold, first preconfigured time period, second preconfigured time period, first preconfigured beam measurement number, and second preconfigured beam measurement number.

For example, taking the example of configuring the RRM threshold for the UE on the network device side, the network device side may configure the RRM threshold Threshold_1 based on SSB measurement and the RRM threshold Threshold_2 based on CSI-RS measurement for the UE.

Step 2: The UE measures the candidate cell according to the measurement configuration information and reports the corresponding measurement result to the network device side. The reporting method can be carried by L1 PUCCH, L1 PUSCH, or MAC CE. The measurement result includes at least one of the following:
a beam identifier;
a cell identifier of a cell where a beam corresponding to a beam measurement result is located;
a Layer 1 beam measurement result for a beam;
a beam identifier used as a transmission configuration indicator (TCI) identifier of a source reference signal;
a radio resource management (RRM) measurement result of a cell corresponding to the cell identifier;
a RRM measurement result of a cell corresponding to a TCI identifier;
first indication information, where the first indication information is configured to indicate whether a cell corresponding to a cell identifier meets an RRM measurement result threshold;
second indication information, where the second indication information is configured to indicate whether a cell corresponding to a TCI identifier meets the RRM measurement result threshold;
third indication information, where the third indication information is configured to indicate whether a signal quality of a beam is optimal within a first time period T1;
fourth indication information, where the fourth indication information is configured to indicate whether a signal quality of a beam meets a beam threshold within a second time period T2;
fifth indication information, where the fifth indication information is configured to indicate whether a signal quality of a beam is optimal in N1 consecutive beam measurements; or
sixth indication information, where the sixth indication information is configured to indicate whether a signal quality of a beam meets a beam threshold in N2 consecutive beam measurements;
where N1 and N2 are positive integers.

Optionally, at least one of the RRM measurement result threshold, the beam threshold, the first time period T1, the second time period T2, the number N1 of beam measurements, and the number of beam measurements N2 is pre-configured on the network device side or specified by the protocol.

For example, corresponding to the example in step 1, the UE reports at least one of the following measurement result information to the network device side through L1 PUCCH, L1 PUSCH, or L2 MAC CE:
CSI-RS index (index);
SSB index;
a cell identifier of a cell where the beam corresponding to the beam measurement result is located;
an L1 beam measurement result for the beam;
The first indication information is configured to indicate whether the measurement of the SSB of the cell corresponding to the cell identifier satisfies its RRM measurement result threshold Threshold_1, and/or to indicate whether the measurement of the CSI-RS of the cell corresponding to the cell identifier satisfies its RRM measurement result threshold Threshold_2;
For another example, take the case where the UE reports the indication information of whether the RRM threshold is met as an example:
   When the network device side does not pre-configure the above RRM threshold, it may be based on the default provisions of the protocol, or depend on the UE implementation. The UE autonomously decides to report at least one of the following information while reporting the L1 beam measurement result:
   CSI-RS index;
   SSB index;
   a cell identifier of a cell where the beam corresponding to the beam measurement result is located;
   an L1 beam measurement result for the beam;
   The first indication information is configured to indicate whether the measurement of the SSB of the cell corresponding to the cell identifier satisfies its RRM measurement result threshold Threshold_1, and/or to indicate whether the measurement of the CSI-RS of the cell corresponding to the cell identifier satisfies its RRM measurement result threshold Threshold_2;
   The above RRM threshold Threshold_1 based on SSB measurement and the RRM threshold Threshold_2 based on CSI-RS measurement are stipulated by the protocol by default, or are decided by the UE itself according to the algorithm.

Step 3: The network equipment side determines whether to trigger a cell management decision based on the reported measurement results; for example, the network equipment side only considers the cell that meets the pre-configured RRM measurement result threshold and the beam measurement results corresponding to the cell as the target cell and the corresponding target beam; or, the network equipment side can also only consider the beam that is always the best within the duration and its corresponding cell as the target cell and target beam.

Embodiment 2: The UE reports the measurement result, and the network device side makes a cell management decision based on the preconfigured cell management triggering condition, specifically including:
Step 1: The UE measures the candidate cell and reports the corresponding beam measurement result to the network device side. The reporting method can be carried by L1 PUCCH, L1 PUSCH, or MAC CE. The measurement result includes at least one of the following:
a beam identifier;
a cell identifier of a cell where a beam corresponding to a beam measurement result is located;
a Layer 1 beam measurement result for a beam;
a beam identifier used as a transmission configuration indicator (TCI) identifier of a source reference signal;
a radio resource management (RRM) measurement result of a cell corresponding to the cell identifier;
a RRM measurement result of a cell corresponding to a TCI identifier.

Optionally, at least one of the RRM measurement result threshold, the beam threshold, the first time period T1, the second time period T2, the number N1 of beam measurements, and the number of beam measurements N2 is pre-configured on the network device side or specified by the protocol.

Step 2: The network device side saves the measurement results reported by the UE and makes a judgment based on the measurement results reported by the UE. The network device side can trigger the cell management decision only when and only when there is a pre-configured cell management triggering condition. The pre-configured cell management triggering condition includes but is not limited to at least one of the following:
the target cell meets a pre-configured radio resource management (RRM) handover triggering condition;
a signal quality of a beam corresponding to the target cell is optimal in a third time period T3;
a signal quality of a beam corresponding to the target cell meets a preconfigured beam triggering condition within a fourth time period T4;
a signal quality of a beam corresponding to the target cell is optimal in N3 consecutive beam measurement result reports; or
a signal quality of a beam corresponding to the target cell meets a pre-configured beam triggering condition in N4 consecutive beam measurement result reports;
where N3 and N4 are positive integers.

In the above case, the UE only reports the corresponding measurement results, and the network equipment side makes a decision based on the pre-configured cell management triggering condition. For example: when the triggering condition is an RRM handover triggering condition, the network equipment side can refer to the RRM measurement results reported by the UE, and only use the cell that meets the pre-configured RRM handover triggering condition and the beam measurement results corresponding to the cell as the target cell and the target beam of the target cell; for another example: the network equipment side can store the corresponding measurement results, and count the corresponding duration period or the beam that always meets the beam triggering condition or the optimal beam in multiple consecutive reports, and the cell where the beam is located as the target beam and target cell, etc.

The above is an introduction to the cell management method in the embodiment of the present disclosure. The following is a further description of the corresponding apparatus, terminal and network equipment in conjunction with the accompanying drawings.

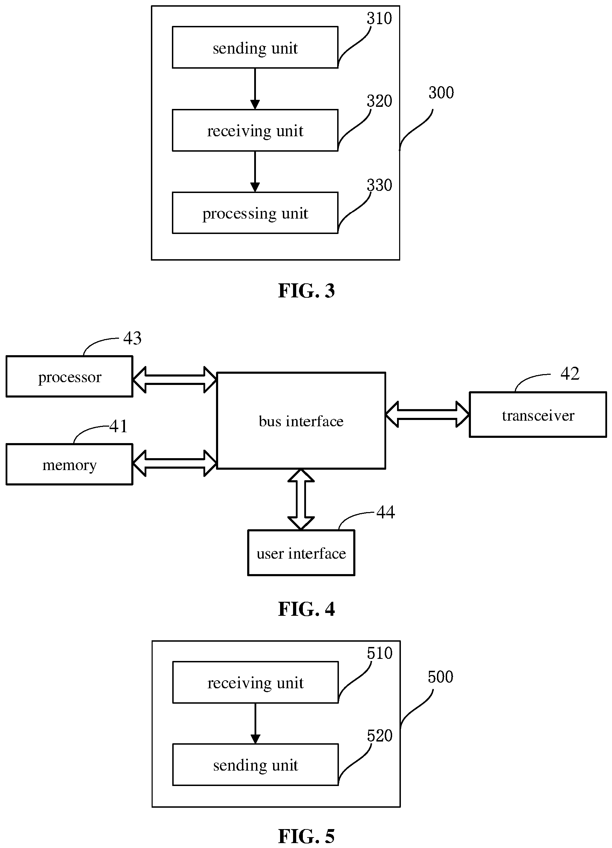

Specifically, as shown in FIG3, an embodiment of the present disclosure provides a terminal 300, including:
a sending unit 310, configured to send the measurement result to the network device;
a receiving unit 320, configured to receive a first command sent by the network device according to the measurement result; where the first command is a Layer 1 command or a Layer 2 command;
a processing unit 330, configured to perform cell management according to the first command.

Optionally, the cell management includes at least one of the following:
primary cell adding;
primary cell changing;
cell handover;
primary SCG cell (PSCell) adding;
primary SCG cell changing;
secondary cell adding; or
secondary cell changing.

Optionally, the measurement result is carried by a physical uplink control channel (PUCCH), or the measurement result is carried by a physical uplink shared channel (PUSCH), or the measurement result is carried by a media access control (MAC) control element (CE).

Optionally, the measurement result includes at least one of the following:
a beam identifier;
a cell identifier of a cell where a beam corresponding to a beam measurement result is located;
a Layer 1 beam measurement result for a beam;
a beam identifier used as a transmission configuration indicator (TCI) identifier of a source reference signal;
a radio resource management (RRM) measurement result of a cell corresponding to the cell identifier;
a RRM measurement result of a cell corresponding to a TCI identifier;
first indication information, where the first indication information is configured to indicate whether a cell corresponding to a cell identifier meets an RRM measurement result threshold;
second indication information, where the second indication information is configured to indicate whether a cell corresponding to a TCI identifier meets the RRM measurement result threshold;
third indication information, where the third indication information is configured to indicate whether a signal quality of a beam is optimal within a first time period T1;
fourth indication information, where the fourth indication information is configured to indicate whether a signal quality of a beam meets a beam threshold within a second time period T2;
fifth indication information, where the fifth indication information is configured to indicate whether a signal quality of a beam is optimal in N1 consecutive beam measurements; or
sixth indication information, where the sixth indication information is configured to indicate whether a signal quality of a beam meets a beam threshold in N2 consecutive beam measurements;
where N1 and N2 are positive integers.

Optionally, the RRM measurement result threshold is a threshold of a measurement item of the RRM measurement result;
the threshold of the measurement item of the RRM measurement result includes at least one of the following:
a reference signal received power (RSRP) threshold;
a reference signal received quality (RSRQ) threshold;
a signal-to-noise and interference ratio (SINR) threshold; or
a block error rate (BLER) threshold.

Optionally, the beam threshold is a threshold of a measurement item of a Layer 1 beam measurement result;
the threshold of the measurement item of the Layer 1 beam measurement result includes at least one of the following:
a RSRP threshold;
a RSRQ threshold; or
a SINR threshold.

Optionally, the threshold of the measurement item of the RRM measurement result is configured for different types of reference signals separately;
and/or
the threshold of the measurement item of the Layer 1 beam measurement result is configured for different types of reference signals separately.

Optionally, the RRM measurement result is at least one of the following:
a measurement result after Layer 1 filtering and beam averaging;
a measurement result after Layer 1 filtering and Layer 3 beam filtering; or
a measurement result after Layer 1 filtering, beam averaging and Layer 3 cell filtering.

Optionally, the Layer 1 beam measurement result is the beam measurement item after only Layer 1 filtering.

Optionally, at least one of the following parameters is pre-configured by a network device side or specified by a protocol:
the RRM measurement result threshold;
the beam threshold;
the first time period T1;
the second time period T2;
the number N1 of beam measurements; or
the number N2 of beam measurements.

It should be noted here that the above-mentioned terminal provided in the embodiment of the present disclosure can implement all the method steps implemented in the above-mentioned terminal side cell management method embodiment, and can achieve the same technical effect. The parts and beneficial effects that are the same as the method embodiment in this embodiment will not be described in detail here.

In order to better achieve the above-mentioned purpose, as shown in FIG.4, the embodiment of the present disclosure provides a cell management apparatus, including a memory 41, a transceiver 42, and a processor 43; where the memory 41 is used to store a computer program; the transceiver 42 is used to send and receive data under the control of the processor 43; the transceiver 42 is used to receive and send data under the control of the processor 43; the processor 43 is configured to read the computer program in the memory 41 and perform the following operations:
sending a measurement result to a network device;
receiving a first command which is sent by the network device according to the measurement result; where the first command is a Layer 1 command or a Layer 2 command; and
performing a cell management according to the first command.

Optionally, the cell management includes at least one of the following:
primary cell adding;
primary cell changing;
cell handover;
primary SCG cell (PSCell) adding;
primary SCG cell changing;
secondary cell adding; or
secondary cell changing.

Optionally, the measurement result is carried by a physical uplink control channel, or the measurement result is carried by a physical uplink shared channel, or the measurement result is carried by a media access control control element.

Optionally, the measurement result includes at least one of the following:
a beam identifier;
a cell identifier of a cell where a beam corresponding to a beam measurement result is located;
a Layer 1 beam measurement result for a beam;
a beam identifier used as a transmission configuration indicator (TCI) identifier of a source reference signal;
a radio resource management (RRM) measurement result of a cell corresponding to the cell identifier;
a RRM measurement result of a cell corresponding to a TCI identifier;
first indication information, where the first indication information is configured to indicate whether a cell corresponding to a cell identifier meets an RRM measurement result threshold;
second indication information, where the second indication information is configured to indicate whether a cell corresponding to a TCI identifier meets the RRM measurement result threshold;
third indication information, where the third indication information is configured to indicate whether a signal quality of a beam is optimal within a first time period T1;
fourth indication information, where the fourth indication information is configured to indicate whether a signal quality of a beam meets a beam threshold within a second time period T2;
fifth indication information, where the fifth indication information is configured to indicate whether a signal quality of a beam is optimal in N1 consecutive beam measurements; or
sixth indication information, where the sixth indication information is configured to indicate whether a signal quality of a beam meets a beam threshold in N2 consecutive beam measurements;
where N1 and N2 are positive integers.

Optionally, the RRM measurement result threshold is a threshold of a measurement item of the RRM measurement result;
the threshold of the measurement item of the RRM measurement result includes at least one of the following:
a reference signal received power (RSRP) threshold;
a reference signal received quality (RSRQ) threshold;
a signal-to-noise and interference ratio (SINR) threshold; or
a block error rate (BLER) threshold.

Optionally, the beam threshold is a threshold of a measurement item of a Layer 1 beam measurement result;
the threshold of the measurement item of the Layer 1 beam measurement result includes at least one of the following:
a RSRP threshold;
a RSRQ threshold; or
a SINR threshold.

Optionally, the threshold of the measurement item of the RRM measurement result is configured for different types of reference signals separately;
and/or
the threshold of the measurement item of the Layer 1 beam measurement result is configured for different types of reference signals separately.

Optionally, the RRM measurement result is at least one of the following:
a measurement result after Layer 1 filtering and beam averaging;
a measurement result after Layer 1 filtering and Layer 3 beam filtering; or
a measurement result after Layer 1 filtering, beam averaging and Layer 3 cell filtering.

Optionally, the Layer 1 beam measurement result is the beam measurement item after only Layer 1 filtering.

Optionally, at least one of the following parameters is pre-configured by a network device side or specified by a protocol:
the RRM measurement result threshold;
the beam threshold;
the first time period T1;
the second time period T2;
the number N1 of beam measurements; or
the number N2 of beam measurements.

In Figure 4, the bus architecture may include any number of interconnected buses and bridges, specifically one or more processors represented by processor 43 and various circuits of memory represented by memory 41 are linked together. The bus architecture can also link various other circuits such as peripherals, voltage regulators and power management circuits together, which are all well known in the art and are therefore not further described herein. The bus interface provides an interface. The transceiver 42 can be a plurality of components, namely, a transmitter and a receiver, providing a unit for communicating with various other devices on a transmission medium, and these transmission media include transmission media such as wireless channels, wired channels, and optical cables. For different user devices, the user interface 44 can also be an interface that can be connected to external and internal devices, and the connected devices include but are not limited to keypads, displays, speakers, microphones, joysticks, etc.

The processor 43 is responsible for managing the bus architecture and general processing, and the memory 41 can store data used by the processor 600 when performing operations.

Optionally, the processor 43 may be a central processing unit (CPU), an application specific integrated circuit (ASIC), a field programmable gate array (FPGA) or a complex programmable logic device (CPLD), and the processor may also adopt a multi-core architecture.

The processor executes any of the methods provided by the embodiments of the present disclosure according to the obtained executable instructions. The processor and the memory can also be arranged physically separately.

It should be noted here that the above-mentioned device provided by the embodiment of the present disclosure can implement all the method steps implemented by the above-mentioned terminal side cell management method embodiment, and can achieve the same technical effect. The parts and beneficial effects of this embodiment that are the same as the method embodiment will not be described in detail here.

As shown in FIG5, an embodiment of the present disclosure provides a network device 500, including:
a receiving unit 510, configured to receive a measurement result sent by a terminal;
a sending unit 520, configured to send a first command to the terminal according to the measurement result; where the first command is a Layer 1 command or a Layer 2 command, and the first command is configured to instruct the terminal to perform a cell management.

Optionally, the sending unit 520 is further configured to perform:
making a cell management decision according to the measurement result, and determining a target cell and/or a target beam corresponding to the target cell;
sending the first command to the terminal; where the first command carries indication information for indicating the target cell and/or the target beam.

Optionally, the sending unit 520 is further configured to perform:
if and only if the measurement result satisfies the cell management triggering condition, making the cell management decision according to the measurement result.

Optionally, the cell management triggering condition includes at least one of the following:
the target cell meets a pre-configured radio resource management (RRM) handover triggering condition;
a signal quality of a beam corresponding to the target cell is optimal in a third time period T3;
a signal quality of a beam corresponding to the target cell meets a preconfigured beam triggering condition within a fourth time period T4;
a signal quality of a beam corresponding to the target cell is optimal in N3 consecutive beam measurement result reports; or
a signal quality of a beam corresponding to the target cell meets a pre-configured beam triggering condition in N4 consecutive beam measurement result reports;
where N3 and N4 are positive integers.

Optionally, the measurement result is carried by a physical uplink control channel, or the measurement result is carried by a physical uplink shared channel, or the measurement result is carried by a media access control control element.

Optionally, the cell management includes at least one of the following:
primary cell adding;
primary cell changing;
cell handover;
primary SCG cell (PSCell) adding;
primary SCG cell changing;
secondary cell adding; or
secondary cell changing.

Optionally, the measurement result includes at least one of the following:
a beam identifier;
a cell identifier of a cell where a beam corresponding to a beam measurement result is located;
a Layer 1 beam measurement result for a beam;
a beam identifier used as a transmission configuration indicator (TCI) identifier of a source reference signal;
a radio resource management (RRM) measurement result of a cell corresponding to the cell identifier;
a RRM measurement result of a cell corresponding to a TCI identifier;
first indication information, where the first indication information is configured to indicate whether a cell corresponding to a cell identifier meets an RRM measurement result threshold;
second indication information, where the second indication information is configured to indicate whether a cell corresponding to a TCI identifier meets the RRM measurement result threshold;
third indication information, where the third indication information is configured to indicate whether a signal quality of a beam is optimal within a first time period T1;
fourth indication information, where the fourth indication information is configured to indicate whether a signal quality of a beam meets a beam threshold within a second time period T2;
fifth indication information, where the fifth indication information is configured to indicate whether a signal quality of a beam is optimal in N1 consecutive beam measurements; or
sixth indication information, where the sixth indication information is configured to indicate whether a signal quality of a beam meets a beam threshold in N2 consecutive beam measurements;
where N1 and N2 are positive integers.

Optionally, the RRM handover triggering condition is a threshold of a measurement item of the RRM measurement result, and/or the RRM measurement result threshold is a threshold of a measurement item of the RRM measurement result;
the threshold of the measurement item of the RRM measurement result includes at least one of the following:
a reference signal received power (RSRP) threshold;
a reference signal received quality (RSRQ) threshold;
a signal-to-noise and interference ratio (SINR) threshold; or
a block error rate (BLER) threshold.

Optionally, the threshold of the measurement item of the RRM measurement result is configured for different types of reference signals separately.

Optionally, the RRM measurement result is at least one of the following:
a measurement result after Layer 1 filtering and beam averaging;
a measurement result after Layer 1 filtering and Layer 3 beam filtering; or
a measurement result after Layer 1 filtering, beam averaging and Layer 3 cell filtering.

Optionally, the beam triggering condition is a threshold of a measurement item of the Layer 1 beam measurement result, and/or the beam threshold is the threshold of the measurement item of the Layer 1 beam measurement result;
a threshold of the measurement item of the Layer 1 beam measurement result includes at least one of the following:
RSRP threshold;
RSRQ threshold; or
SINR threshold.

Optionally, the threshold of the measurement item of the Layer 1 beam measurement result is configured for different types of reference signals separately.

Optionally, the Layer 1 beam measurement result is the beam measurement item after only Layer 1 filtering.

Optionally, at least one of the following parameters is pre-configured on the network device side or specified by the protocol:
the RRM measurement result threshold;
the beam threshold;
the first time period T1;
the second time period T2;
the third time period T3;
the fourth time period T4;
the number N1 of beam measurements;
the number N2 of beam measurements;
the number N3 of beam measurements; or
the number N4 of beam measurements.

It should be noted here that the above-mentioned network device provided in the embodiment of the present disclosure can implement all the method steps implemented in the above-mentioned network device side cell management method embodiment, and can achieve the same technical effect. The parts and beneficial effects that are the same as the method embodiment in this embodiment will not be described in detail here.

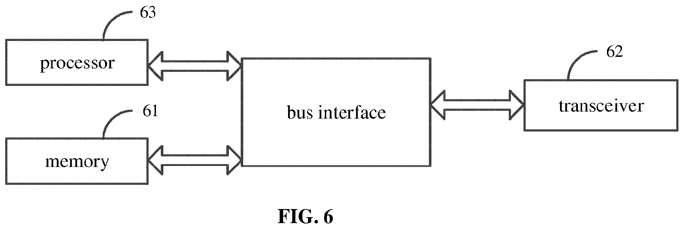

In order to better achieve the above purpose, as shown in FIG.6, a cell management apparatus is provided, including a memory 61, a transceiver 62, and a processor 63; where the memory 61 is used to store computer programs; the transceiver 62 is used to send and receive data under the control of the processor 63; the transceiver 62 is used to receive and send data under the control of the processor 63; the processor 63 is configured to read the computer program in the memory 61 and perform the following operations:
receiving a measurement result sent by a terminal;
sending a first command to the terminal according to the measurement result; where the first command is a Layer 1 command or a Layer 2 command, and the first command is configured to instruct the terminal to perform a cell management.

Optionally, the processor 63 is configured to read the computer program in the memory to perform:
making a cell management decision according to the measurement result, and determining a target cell and/or a target beam corresponding to the target cell;
sending the first command to the terminal; where the first command carries indication information for indicating the target cell and/or the target beam.

Optionally, the processor 63 is configured to read the computer program in the memory to perform:
if and only if the measurement result satisfies the cell management triggering condition, making the cell management decision according to the measurement result.

Optionally, the cell management triggering condition includes at least one of the following:
the target cell meets a pre-configured radio resource management (RRM) handover triggering condition;
a signal quality of a beam corresponding to the target cell is optimal in a third time period T3;
a signal quality of a beam corresponding to the target cell meets a preconfigured beam triggering condition within a fourth time period T4;
a signal quality of a beam corresponding to the target cell is optimal in N3 consecutive beam measurement result reports; or
a signal quality of a beam corresponding to the target cell meets a pre-configured beam triggering condition in N4 consecutive beam measurement result reports;
where N3 and N4 are positive integers.

Optionally, the measurement result is carried by a physical uplink control channel, or the measurement result is carried by a physical uplink shared channel, or the measurement result is carried by a media access control control element.

Optionally, the cell management includes at least one of the following:
primary cell adding;
primary cell changing;
cell handover;
primary SCG cell (PSCell) adding;
primary SCG cell changing;
secondary cell adding; or
secondary cell changing.

Optionally, the measurement result includes at least one of the following:
a beam identifier;
a cell identifier of a cell where a beam corresponding to a beam measurement result is located;
a Layer 1 beam measurement result for a beam;
a beam identifier used as a transmission configuration indicator (TCI) identifier of a source reference signal;
a radio resource management (RRM) measurement result of a cell corresponding to the cell identifier;
a RRM measurement result of a cell corresponding to a TCI identifier;
first indication information, where the first indication information is configured to indicate whether a cell corresponding to a cell identifier meets an RRM measurement result threshold;
second indication information, where the second indication information is configured to indicate whether a cell corresponding to a TCI identifier meets the RRM measurement result threshold;
third indication information, where the third indication information is configured to indicate whether a signal quality of a beam is optimal within a first time period T1;
fourth indication information, where the fourth indication information is configured to indicate whether a signal quality of a beam meets a beam threshold within a second time period T2;
fifth indication information, where the fifth indication information is configured to indicate whether a signal quality of a beam is optimal in N1 consecutive beam measurements; or
sixth indication information, where the sixth indication information is configured to indicate whether a signal quality of a beam meets a beam threshold in N2 consecutive beam measurements;
where N1 and N2 are positive integers.

Optionally, the RRM handover triggering condition is a threshold of a measurement item of the RRM measurement result, and/or the RRM measurement result threshold is a threshold of a measurement item of the RRM measurement result;
the threshold of the measurement item of the RRM measurement result includes at least one of the following:
a reference signal received power (RSRP) threshold;
a reference signal received quality (RSRQ) threshold;
a signal-to-noise and interference ratio (SINR) threshold; or
a block error rate (BLER) threshold.

Optionally, the threshold of the measurement item of the RRM measurement result is configured for different types of reference signals separately.

Optionally, the RRM measurement result is at least one of the following:
a measurement result after Layer 1 filtering and beam averaging;
a measurement result after Layer 1 filtering and Layer 3 beam filtering; or
a measurement result after Layer 1 filtering, beam averaging and Layer 3 cell filtering.

Optionally, the beam triggering condition is a threshold of a measurement item of the Layer 1 beam measurement result, and/or the beam threshold is the threshold of the measurement item of the Layer 1 beam measurement result;
a threshold of the measurement item of the Layer 1 beam measurement result includes at least one of the following:
RSRP threshold;
RSRQ threshold; or
SINR threshold.

Optionally, the threshold of the measurement item of the Layer 1 beam measurement result is configured for different types of reference signals separately.

Optionally, the Layer 1 beam measurement result is the beam measurement item after only Layer 1 filtering.

Optionally, at least one of the following parameters is pre-configured on the network device side or specified by the protocol:
the RRM measurement result threshold;
the beam threshold;
the first time period T1;
the second time period T2;
the third time period T3;
the fourth time period T4;
the number N1 of beam measurements;
the number N2 of beam measurements;
the number N3 of beam measurements; or
the number N4 of beam measurements.

In FIG.6, the bus architecture may include any number of interconnected buses and bridges, specifically one or more processors represented by processor 63 and various circuits of memory represented by memory 61 are linked together. The bus architecture may also link together various other circuits such as peripherals, voltage regulators, and power management circuits, which are well known in the art and are therefore not further described herein. The bus interface provides an interface. The transceiver 62 may be a plurality of components, namely, a transmitter and a receiver, providing a unit for communicating with various other devices on a transmission medium, which transmission medium includes a wireless channel, a wired channel, an optical cable, and other transmission media. The processor 63 is responsible for managing the bus architecture and general processing, and the memory x20 may store data used by the processor x10 when performing operations.

The processor 63 may be a central processing unit (CPU), an application specific integrated circuit (ASIC), a field programmable gate array (FPGA) or a complex programmable logic device (CPLD). The processor may also adopt a multi-core architecture.

It should be noted here that the above-mentioned device provided by the embodiment of the present disclosure can implement all the method steps implemented by the above-mentioned network device side cell management method embodiment, and can achieve the same technical effect. The parts and beneficial effects of this embodiment that are the same as the method embodiment will not be described in detail here.

It should be noted that the division of units in the embodiments of the present disclosure is schematic and is only a logical function division. There may be other division methods in actual implementation. In addition, each functional unit in each embodiment of the present disclosure may be integrated into a processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it can be stored in a processor-readable storage medium. Based on this understanding, the technical solution of the present disclosure is essentially or the part that contributes to the relevant technology or all or part of the technical solution can be embodied in the form of a software product. The computer software product is stored in a storage medium, including several instructions to enable a computer device (which can be a personal computer, server, or network device, etc.) or a processor (processor) to perform all or part of the steps of the method described in each embodiment of the present disclosure. The aforementioned storage medium includes: U disk, mobile hard disk, read-only memory (Read-Only Memory, ROM), random access memory (Random Access Memory, RAM), disk or optical disk and other media that can store program codes.

The embodiments of the present disclosure also provide a processor-readable storage medium, which stores a computer program, and the computer program is used to enable the processor to execute the steps of the cell management method on the terminal side, or the computer program is used to enable the processor to execute the steps of the cell management method on the network device side, and can achieve the same technical effect. The parts and beneficial effects of this embodiment that are the same as those of the method embodiment will not be described in detail here.

The processor-readable storage medium may be any available medium or data storage device that can be accessed by the processor, including but not limited to magnetic storage (e.g., floppy disk, hard disk, magnetic tape, magneto-optical (MO), etc.), optical storage (e.g., compact disk (CD), digital video disc (DVD), Blu-ray Disc (BD), high-definition versatile disc (HVD), etc.), and semiconductor storage (e.g., ROM, Electrical Programmable Read - Only Memory (EPROM), Electrically Erasable Programmable Read - Only Memory (EEPROM), non - volatile memory (NAND FLASH), solid-state hard disk (SSD), etc.).

Those skilled in the art will appreciate that the embodiments of the present disclosure may be provided as methods, systems, or computer program products. Therefore, the present disclosure may take the form of a complete hardware embodiment, a complete software embodiment, or an embodiment combining software and hardware. Furthermore, the present disclosure may take the form of a computer program product implemented on one or more computer-usable storage media (including but not limited to disk storage and optical storage, etc.) containing computer-usable program codes.

The present disclosure is described with reference to the flowcharts and/or block diagrams of the methods, devices (systems), and computer program products according to the embodiments of the present disclosure. It should be understood that each process and/or box in the flowchart and/or block diagram, as well as the combination of the processes and/or boxes in the flowchart and/or block diagram, can be implemented by computer executable instructions. These computer executable instructions can be provided to a processor of a general-purpose computer, a special-purpose computer, an embedded processor, or other programmable data processing device to produce a machine, so that the instructions executed by the processor of the computer or other programmable data processing device produce a device for implementing the functions specified in one process or multiple processes in the flowchart and/or one box or multiple boxes in the block diagram.

These processor-executable instructions may also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more boxes in the block diagram.

These processor-executable instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more flows in the flowchart and/or one or more blocks in the block diagram.

In addition, it should be pointed out that in the apparatus and method of the present disclosure, it is obvious that each component or each step can be decomposed and / or recombined. These decompositions and / or recombinations should be regarded as equivalent schemes of the present disclosure. Moreover, the steps of performing the above series of processing can naturally be performed in chronological order according to the order of description, but it is not necessary to perform them in chronological order, and some steps can be performed in parallel or independently of each other. For those of ordinary skill in the art, it is understandable that all or any steps or components of the method and apparatus of the present disclosure can be implemented in hardware, firmware, software or a combination thereof in any computing device (including processors, storage media, etc.) or a network of computing devices, which can be achieved by those of ordinary skill in the art using their basic programming skills after reading the description of the present disclosure.

Those skilled in the art can clearly understand that, for the convenience and brevity of description, the specific working processes of the systems, devices and units described above can refer to the corresponding processes in the aforementioned method embodiments and will not be repeated here.

In the embodiments provided in the present disclosure, it should be understood that the disclosed devices and methods can be implemented in other ways. For example, the device embodiments described above are only schematic. For example, the division of the units is only a logical function division. There may be other division methods in actual implementation, such as multiple units or components can be combined or integrated into another system, or some features can be ignored or not executed. Another point is that the mutual coupling or direct coupling or communication connection shown or discussed can be through some interfaces, indirect coupling or communication connection of devices or units, which can be electrical, mechanical or other forms.

The units described as separate components may or may not be physically separated, and the components shown as units may or may not be physical units, that is, they may be located in one place or distributed on multiple network units. Some or all of the units may be selected according to actual needs to achieve the purpose of the solution of this embodiment.

In addition, each functional unit in each embodiment of the present disclosure may be integrated into one processing unit, or each unit may exist physically separately, or two or more units may be integrated into one unit.

Obviously, those skilled in the art can make various changes and modifications to the present disclosure without departing from the spirit and scope of the present disclosure. Thus, if these modifications and variations of the present disclosure fall within the scope of the claims of the present disclosure and their equivalents, the present disclosure is also intended to include these modifications and variations.

## Claims

1. A cell management method, comprising:
sending, by a terminal, a measurement result to a network device;
receiving, by the terminal, a first command which is sent by the network device according to the measurement result; wherein the first command is a Layer 1 command or a Layer 2 command; and
performing, by the terminal, a cell management according to the first command.

2. The cell management method according to claim 1, wherein the cell management comprises at least one of the following:
primary cell adding;
primary cell changing;
cell handover;
primary SCG cell (PSCell) adding;
primary SCG cell changing;
secondary cell adding; or
secondary cell changing.

3. The cell management method according to claim 1, wherein the measurement result is carried by a physical uplink control channel, or the measurement result is carried by a physical uplink shared channel, or the measurement result is carried by a media access control control element.

4. The cell management method according to claim 1, wherein the measurement result comprises at least one of the following:
a beam identifier;
a cell identifier of a cell where a beam corresponding to a beam measurement result is located;
a Layer 1 beam measurement result for a beam;
a beam identifier used as a transmission configuration indicator (TCI) identifier of a source reference signal;
a radio resource management (RRM) measurement result of a cell corresponding to the cell identifier;
a RRM measurement result of a cell corresponding to a TCI identifier;
first indication information, wherein the first indication information is configured to indicate whether a cell corresponding to a cell identifier meets an RRM measurement result threshold;
second indication information, wherein the second indication information is configured to indicate whether a cell corresponding to a TCI identifier meets the RRM measurement result threshold;
third indication information, wherein the third indication information is configured to indicate whether a signal quality of a beam is optimal within a first time period T1;
fourth indication information, wherein the fourth indication information is configured to indicate whether a signal quality of a beam meets a beam threshold within a second time period T2;
fifth indication information, wherein the fifth indication information is configured to indicate whether a signal quality of a beam is optimal in N1 consecutive beam measurements; or
sixth indication information, wherein the sixth indication information is configured to indicate whether a signal quality of a beam meets a beam threshold in N2 consecutive beam measurements;
wherein N1 and N2 are positive integers.

5. The cell management method according to claim 4, wherein the RRM measurement result threshold is a threshold of a measurement item of the RRM measurement result;
the threshold of the measurement item of the RRM measurement result comprises at least one of the following:
a reference signal received power (RSRP) threshold;
a reference signal received quality (RSRQ) threshold;
a signal-to-noise and interference ratio (SINR) threshold; or
a block error rate (BLER) threshold.

6. The cell management method according to claim 4, wherein the beam threshold is a threshold of a measurement item of a Layer 1 beam measurement result;
the threshold of the measurement item of the Layer 1 beam measurement result comprises at least one of the following:
a RSRP threshold;
a RSRQ threshold; or
a SINR threshold.

7. The cell management method according to claim 4, wherein at least one of the following parameters is pre-configured by a network device side or specified by a protocol:
the RRM measurement result threshold;
the beam threshold;
the first time period T1;
the second time period T2;
the number N1 of beam measurements; or
the number N2 of beam measurements.

8. A cell management method, comprising:
receiving, by a network device, a measurement result sent by a terminal;
sending, by a network device, a first command to the terminal according to the measurement result; wherein the first command is a Layer 1 command or a Layer 2 command, and the first command is configured to instruct the terminal to perform a cell management.

9. The cell management method according to claim 8, wherein the sending by the network device the first command to the terminal according to the measurement result comprises:
making, by the network device, a cell management decision according to the measurement result, and determining a target cell and/or a target beam corresponding to the target cell;
sending, by the network device, the first command to the terminal; wherein the first command carries indication information for indicating the target cell and/or the target beam.

10. The cell management method according to claim 9, wherein the making by the network device the cell management decision according to the measurement result comprises:
if and only if the measurement result satisfies a cell management triggering condition, making, by the network device, the cell management decision according to the measurement result.

11. The cell management method according to claim 10, wherein the cell management triggering condition comprises at least one of the following:
the target cell meets a pre-configured radio resource management (RRM) handover triggering condition;
a signal quality of a beam corresponding to the target cell is optimal in a third time period T3;
a signal quality of a beam corresponding to the target cell meets a preconfigured beam triggering condition within a fourth time period T4;
a signal quality of a beam corresponding to the target cell is optimal in N3 consecutive beam measurement result reports; or
a signal quality of a beam corresponding to the target cell meets a pre-configured beam triggering condition in N4 consecutive beam measurement result reports;
wherein N3 and N4 are positive integers.

12. The cell management method according to claim 8, wherein the measurement result is carried by a physical uplink control channel, or the measurement result is carried by a physical uplink shared channel, or the measurement result is carried by a media access control control element.

13. The cell management method according to claim 8, wherein the cell management comprises at least one of the following:
primary cell adding;
primary cell changing;
cell handover;
primary SCG cell (PSCell) adding;
primary SCG cell changing;
secondary cell adding; or
secondary cell changing.

14. The cell management method according to claim 8, wherein the measurement result comprises at least one of the following:
a beam identifier;
a cell identifier of a cell where a beam corresponding to a beam measurement result is located;
a Layer 1 beam measurement result for a beam;
a beam identifier used as a transmission configuration indicator (TCI) identifier of a source reference signal;
a radio resource management (RRM) measurement result of a cell corresponding to the cell identifier;
a RRM measurement result of a cell corresponding to a TCI identifier;
first indication information, wherein the first indication information is configured to indicate whether a cell corresponding to a cell identifier meets an RRM measurement result threshold;
second indication information, wherein the second indication information is configured to indicate whether a cell corresponding to a TCI identifier meets the RRM measurement result threshold;
third indication information, wherein the third indication information is configured to indicate whether a signal quality of a beam is optimal within a first time period T1;
fourth indication information, wherein the fourth indication information is configured to indicate whether a signal quality of a beam meets a beam threshold within a second time period T2;
fifth indication information, wherein the fifth indication information is configured to indicate whether a signal quality of a beam is optimal in N1 consecutive beam measurements; or
sixth indication information, wherein the sixth indication information is configured to indicate whether a signal quality of a beam meets a beam threshold in N2 consecutive beam measurements;
wherein N1 and N2 are positive integers.

15. The cell management method according to claim 11 or 14, wherein the RRM handover triggering condition is a threshold of a measurement item of the RRM measurement result, and/or the RRM measurement result threshold is a threshold of a measurement item of the RRM measurement result;
the threshold of the measurement item of the RRM measurement result comprises at least one of the following:
a reference signal received power (RSRP) threshold;
a reference signal received quality (RSRQ) threshold;
a signal-to-noise and interference ratio (SINR) threshold; or
a block error rate (BLER) threshold.

16. The cell management method according to claim 15, wherein the threshold of the measurement item of the RRM measurement result is configured for different types of reference signals separately.

17. The cell management method according to claim 15, wherein the RRM measurement result is at least one of the following:
a measurement result after Layer 1 filtering and beam averaging;
a measurement result after Layer 1 filtering and Layer 3 beam filtering; or
a measurement result after Layer 1 filtering, beam averaging and Layer 3 cell filtering.

18. The cell management method according to claim 11 or 14, wherein the beam triggering condition is a threshold of a measurement item of the Layer 1 beam measurement result, and/or the beam threshold is the threshold of the measurement item of the Layer 1 beam measurement result;
a threshold of the measurement item of the Layer 1 beam measurement result includes at least one of the following:
RSRP threshold;
RSRQ threshold; or
SINR threshold.

19. The cell management method according to claim 18, wherein the threshold of the measurement item of the Layer 1 beam measurement result is configured for different types of reference signals separately.

20. The cell management method according to claim 18, wherein the Layer 1 beam measurement result is the beam measurement item after only Layer 1 filtering.

21. The cell management method according to claim 11 or 14, wherein at least one of the following parameters is pre-configured on the network device side or specified by the protocol:
the RRM measurement result threshold;
the beam threshold;
the first time period T1;
the second time period T2;
the third time period T3;
the fourth time period T4;
the number N1 of beam measurements;
the number N2 of beam measurements;
the number N3 of beam measurements; or
the number N4 of beam measurements.

22. A cell management apparatus, comprising a memory, a transceiver, and a processor; wherein
the memory is configured to store computer programs; the transceiver is configured to send and receive data under a control of the processor; the processor is configured to read the computer program in the memory to perform:
sending a measurement result to a network device;
receiving a first command which is sent by the network device according to the measurement result; wherein the first command is a Layer 1 command or a Layer 2 command; and
performing a cell management according to the first command.

23. The cell management apparatus according to claim 22, wherein the cell management comprises at least one of the following:
primary cell adding;
primary cell changing;
cell handover;
primary SCG cell (PSCell) adding;
primary SCG cell changing;
secondary cell adding; or
secondary cell changing.

24. The cell management apparatus according to claim 22, wherein the measurement result is carried by a physical uplink control channel, or the measurement result is carried by a physical uplink shared channel, or the measurement result is carried by a media access control control element.

25. The cell management apparatus according to claim 22, wherein the measurement result comprises at least one of the following:
a beam identifier;
a cell identifier of a cell where a beam corresponding to a beam measurement result is located;
a Layer 1 beam measurement result for a beam;
a beam identifier used as a transmission configuration indicator (TCI) identifier of a source reference signal;
a radio resource management (RRM) measurement result of a cell corresponding to the cell identifier;
a RRM measurement result of a cell corresponding to a TCI identifier;
first indication information, wherein the first indication information is configured to indicate whether a cell corresponding to a cell identifier meets an RRM measurement result threshold;
second indication information, wherein the second indication information is configured to indicate whether a cell corresponding to a TCI identifier meets the RRM measurement result threshold;
third indication information, wherein the third indication information is configured to indicate whether a signal quality of a beam is optimal within a first time period T1;
fourth indication information, wherein the fourth indication information is configured to indicate whether a signal quality of a beam meets a beam threshold within a second time period T2;
fifth indication information, wherein the fifth indication information is configured to indicate whether a signal quality of a beam is optimal in N1 consecutive beam measurements; or
sixth indication information, wherein the sixth indication information is configured to indicate whether a signal quality of a beam meets a beam threshold in N2 consecutive beam measurements;
wherein N1 and N2 are positive integers.

26. A terminal, comprising:
a sending unit, configured to send a measurement result to a network device;
a receiving unit, configured to receive a first command which is sent by the network device according to the measurement result; wherein the first command is a Layer 1 command or a Layer 2 command; and
a processing unit, configured to perform cell management according to the first command.

27. The terminal according to claim 26, wherein the cell management comprises at least one of the following:
primary cell adding;
primary cell changing;
cell handover;
primary SCG cell (PSCell) adding;
primary SCG cell changing;
secondary cell adding; or
secondary cell changing.

28. The terminal according to claim 26, wherein the measurement result is carried through a physical uplink control channel, or the measurement result is carried through a physical uplink shared channel, or the measurement result is carried through a media access control control element.

29. The terminal according to claim 26, wherein the measurement result comprises at least one of the following:
a beam identifier;
a cell identifier of a cell where a beam corresponding to a beam measurement result is located;
a Layer 1 beam measurement result for a beam;
a beam identifier used as a transmission configuration indicator (TCI) identifier of a source reference signal;
a radio resource management (RRM) measurement result of a cell corresponding to the cell identifier;
a RRM measurement result of a cell corresponding to a TCI identifier;
first indication information, wherein the first indication information is configured to indicate whether a cell corresponding to a cell identifier meets an RRM measurement result threshold;
second indication information, wherein the second indication information is configured to indicate whether a cell corresponding to a TCI identifier meets the RRM measurement result threshold;
third indication information, wherein the third indication information is configured to indicate whether a signal quality of a beam is optimal within a first time period T1;
fourth indication information, wherein the fourth indication information is configured to indicate whether a signal quality of a beam meets a beam threshold within a second time period T2;
fifth indication information, wherein the fifth indication information is configured to indicate whether a signal quality of a beam is optimal in N1 consecutive beam measurements; or
sixth indication information, wherein the sixth indication information is configured to indicate whether a signal quality of a beam meets a beam threshold in N2 consecutive beam measurements;
wherein N1 and N2 are positive integers.

30. The terminal according to claim 29, wherein the RRM measurement result threshold is a threshold of a measurement item of the RRM measurement result;
the threshold of the measurement item of the RRM measurement result comprises at least one of the following:
a reference signal received power (RSRP) threshold;
a reference signal received quality (RSRQ) threshold;
a signal-to-noise and interference ratio (SINR) threshold; or
a block error rate (BLER) threshold.

31. The terminal according to claim 29, wherein the beam threshold is a threshold of a measurement item of a Layer 1 beam measurement result;
the threshold of the measurement item of the Layer 1 beam measurement result comprises at least one of the following:
a RSRP threshold;
a RSRQ threshold; or
a SINR threshold.

32. The terminal according to claim 29, wherein at least one of the following parameters is pre-configured on the network device side or specified by the protocol:
the RRM measurement result threshold;
the beam threshold;
the first time period T1;
the second time period T2;
the number N1 of beam measurements; or
the number N2 of beam measurements.

33. A cell management apparatus, comprising a memory, a transceiver, and a processor;
the memory is configured to store computer programs; the transceiver is configured to send and receive data under the control of the processor; the processor is configured to read the computer program in the memory to perform:
receiving a measurement result sent by a terminal;
sending a first command to the terminal according to the measurement result; wherein the first command is a Layer 1 command or a Layer 2 command, and the first command is configured to instruct the terminal to perform a cell management.

34. The cell management apparatus according to claim 33, wherein the processor is configured to read the computer program in the memory to perform:
making a cell management decision according to the measurement result, and determining a target cell and/or a target beam corresponding to the target cell;
sending the first command to the terminal; wherein the first command carries indication information for indicating the target cell and/or the target beam.

35. The cell management apparatus according to claim 34, wherein the processor is configured to read the computer program in the memory to perform:
if and only if the measurement result satisfies the cell management triggering condition, making the cell management decision according to the measurement result.

36. The cell management apparatus according to claim 35, wherein the cell management triggering condition comprises at least one of the following:
the target cell meets a pre-configured radio resource management (RRM) handover triggering condition;
a signal quality of a beam corresponding to the target cell is optimal in a third time period T3;
a signal quality of a beam corresponding to the target cell meets a preconfigured beam triggering condition within a fourth time period T4;
a signal quality of a beam corresponding to the target cell is optimal in N3 consecutive beam measurement result reports; or
a signal quality of a beam corresponding to the target cell meets a pre-configured beam triggering condition in N4 consecutive beam measurement result reports;
wherein N3 and N4 are positive integers.

37. The cell management apparatus according to claim 33, wherein the measurement result is carried by a physical uplink control channel, or the measurement result is carried by a physical uplink shared channel, or the measurement result is carried by a media access control control element.

38. The cell management apparatus according to claim 33, wherein the cell management comprises at least one of the following:
primary cell adding;
primary cell changing;
cell handover;
primary SCG cell (PSCell) adding;
primary SCG cell changing;
secondary cell adding; or
secondary cell changing.

39. The cell management apparatus according to claim 33, wherein the measurement result comprises at least one of the following:
a beam identifier;
a cell identifier of a cell where a beam corresponding to a beam measurement result is located;
a Layer 1 beam measurement result for a beam;
a beam identifier used as a transmission configuration indicator (TCI) identifier of a source reference signal;
a radio resource management (RRM) measurement result of a cell corresponding to the cell identifier;
a RRM measurement result of a cell corresponding to a TCI identifier;
first indication information, wherein the first indication information is configured to indicate whether a cell corresponding to a cell identifier meets an RRM measurement result threshold;
second indication information, wherein the second indication information is configured to indicate whether a cell corresponding to a TCI identifier meets the RRM measurement result threshold;
third indication information, wherein the third indication information is configured to indicate whether a signal quality of a beam is optimal within a first time period T1;
fourth indication information, wherein the fourth indication information is configured to indicate whether a signal quality of a beam meets a beam threshold within a second time period T2;
fifth indication information, wherein the fifth indication information is configured to indicate whether a signal quality of a beam is optimal in N1 consecutive beam measurements; or
sixth indication information, wherein the sixth indication information is configured to indicate whether a signal quality of a beam meets a beam threshold in N2 consecutive beam measurements;
wherein N1 and N2 are positive integers.

40. A network device, comprising:
a receiving unit, configured to receive a measurement result sent by a terminal;
a sending unit, configured to send a first command to the terminal according to the measurement result; wherein the first command is a Layer 1 command or a Layer 2 command, and the first command is configured to instruct the terminal to perform a cell management.

41. The network device according to claim 40, wherein the sending unit is further configured to:
make a cell management decision according to the measurement result, and determine a target cell and/or a target beam corresponding to the target cell;
send the first command to the terminal; wherein the first command carries indication information for indicating the target cell and/or the target beam.

42. The network device according to claim 41, wherein the sending unit is further configured to:
if and only if the measurement result satisfies the cell management triggering condition, make a cell management decision according to the measurement result.

43. The network device according to claim 42, wherein the cell management triggering condition comprises at least one of the following:
the target cell meets a pre-configured radio resource management (RRM) handover triggering condition;
a signal quality of a beam corresponding to the target cell is optimal in a third time period T3;
a signal quality of a beam corresponding to the target cell meets a preconfigured beam triggering condition within a fourth time period T4;
a signal quality of a beam corresponding to the target cell is optimal in N3 consecutive beam measurement result reports; or
a signal quality of a beam corresponding to the target cell meets a pre-configured beam triggering condition in N4 consecutive beam measurement result reports;
wherein N3 and N4 are positive integers.

44. The network device according to claim 40, wherein the measurement result is carried by a physical uplink control channel, or the measurement result is carried by a physical uplink shared channel, or the measurement result is carried by a media access control control element.

45. The network device according to claim 40, wherein the cell management comprises at least one of the following:
primary cell adding;
primary cell changing;
cell handover;
primary SCG cell (PSCell) adding;
primary SCG cell changing;
secondary cell adding; or
secondary cell changing.

46. The network device according to claim 40, wherein the measurement result comprises at least one of the following:
a beam identifier;
a cell identifier of a cell where a beam corresponding to a beam measurement result is located;
a Layer 1 beam measurement result for a beam;
a beam identifier used as a transmission configuration indicator (TCI) identifier of a source reference signal;
a radio resource management (RRM) measurement result of a cell corresponding to the cell identifier;
a RRM measurement result of a cell corresponding to a TCI identifier;
first indication information, wherein the first indication information is configured to indicate whether a cell corresponding to a cell identifier meets an RRM measurement result threshold;
second indication information, wherein the second indication information is configured to indicate whether a cell corresponding to a TCI identifier meets the RRM measurement result threshold;
third indication information, wherein the third indication information is configured to indicate whether a signal quality of a beam is optimal within a first time period T1;
fourth indication information, wherein the fourth indication information is configured to indicate whether a signal quality of a beam meets a beam threshold within a second time period T2;
fifth indication information, wherein the fifth indication information is configured to indicate whether a signal quality of a beam is optimal in N1 consecutive beam measurements; or
sixth indication information, wherein the sixth indication information is configured to indicate whether a signal quality of a beam meets a beam threshold in N2 consecutive beam measurements;
wherein N1 and N2 are positive integer.

47. The network device according to claim 43 or 46, wherein the RRM handover triggering condition is a threshold of a measurement item of the RRM measurement result, and/or the RRM measurement result threshold is the threshold of the measurement item of the RRM measurement result;
the threshold of the measurement item of the RRM measurement result comprises at least one of the following:
a reference signal received power (RSRP) threshold;
a reference signal received quality (RSRQ) threshold;
a signal-to-noise and interference ratio (SINR) threshold; or
a block error rate (BLER) threshold.

48. The network device according to claim 47, wherein the threshold of the measurement item of the RRM measurement result is configured for different types of reference signals separately.

49. The network device according to claim 47, wherein the RRM measurement result is at least one of the following:
a measurement result after Layer 1 filtering and beam averaging;
a measurement result after Layer 1 filtering and Layer 3 beam filtering; or
a measurement result after Layer 1 filtering, beam averaging and Layer 3 cell filtering.

50. The network device according to claim 43 or 46, wherein the beam triggering condition is a threshold of a measurement item of a Layer 1 beam measurement result, and/or the beam threshold is a threshold of a measurement item of a Layer 1 beam measurement result;
a threshold of the measurement item of the Layer 1 beam measurement result includes at least one of the following:
RSRP threshold;
RSRQ threshold; or
SINR threshold.

51. The network device according to claim 50, wherein the threshold of the measurement item of the Layer 1 beam measurement result is configured for different types of reference signals separately..

52. The network device according to claim 50, wherein the Layer 1 beam measurement result is the beam measurement item after only Layer 1 filtering.

53. The network device according to claim 43 or 46, wherein at least one of the following parameters is pre-configured on the network device side or specified by the protocol:
the RRM measurement result threshold;
the beam threshold;
the first time period T1;
the second time period T2;
the third time period T3;
the fourth time period T4;
the number N1 of beam measurements;
the number N2 of beam measurements;
the number N3 of beam measurements; or
the number N4 of beam measurements.

54. A processor-readable storage medium, storing a computer program, wherein the computer program is configured to enable the processor to perform the cell management method according to any one of claims 1 to 7, or the computer program is configured to enable the processor to perform the cell management method according to any one of claims 8 to 21.
